(19) Europäisches Patentamt / European Patent Office / Office européen des brevets

(11) **EP 3 264 787 B1**

(12) **EUROPEAN PATENT SPECIFICATION**

(45) Date of publication and mention
of the grant of the patent:
**25.09.2019 Bulletin 2019/39**

(51) Int Cl.:
*H04Q 9/14* *(2006.01)*    *F01N 11/00* *(2006.01)*

(21) Application number: **16305775.5**

(22) Date of filing: **27.06.2016**

(54) **METHOD OF TRANSMITTING A TRANSDUCER OUTPUT SIGNAL FROM A TRANSDUCER UNIT TO AN EVALUATION UNIT**

VERFAHREN ZUR ÜBERTRAGUNG EINES WANDLERAUSGANGSSIGNALS EINER WANDLEREINHEIT AN EINE AUSWERTUNGSEINHEIT

PROCÉDÉ DE TRANSMISSION D'UN SIGNAL DE SORTIE DE TRANSDUCTEUR À PARTIR D'UNE UNITÉ DE TRANSDUCTEUR À UNE UNITÉ D'ÉVALUATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.01.2018 Bulletin 2018/01**

(73) Proprietor: **MEAS France**
**31027 Toulouse Cedex 3 (FR)**

(72) Inventor: **BEZ, Denis**
**31470 Fonsorbes (FR)**

(74) Representative: **Grünecker Patent- und Rechtsanwälte**
**PartG mbB**
**Leopoldstraße 4**
**80802 München (DE)**

(56) References cited:
**EP-A2- 2 348 326     US-A1- 2005 109 935**
**US-A1- 2011 301 883     US-A1- 2012 118 059**

**Description**

The present invention relates to a method of transmitting a transducer output signal from a transducer unit to an evaluation unit, to a method of decoding a transducer output signal received from the transducer unit by the evaluation unit, and to the respective transducer unit and evaluation unit.

In most sensor application environments where a sensor produces an electrical sensor signal from a variable to be measured, this sensor signal has to be transmitted via a communication line to some kind of destination device which further evaluates and utilizes the sensor signal. Depending on the particular application, the distance between the transducer unit and the evaluation may differ, and the communication line may either be a wirebound connection or a wireless connection, such as radio communication link.

The present invention may advantageously be used with a piezoelectric ultrasonic urea sensor in a vehicle. Such urea sensors are used for determining the urea concentration and the fluid level inside a diesel exhaust fluid tank.

Exhaust gas aftertreatment is highly instrumental in further reducing motor vehicle emissions. Alongside reducing $CO_2$ emissions, minimizing the level of harmful nitrogen oxide emissions is one of the greatest challenges for automotive industry. Many passenger cars and commercial vehicles with diesel engines are equipped with a so-called selective catalytic reduction (SCR) system. By making an aqueous urea solution, also referred to as diesel exhaust fluid (DEF), react with nitrogen oxides in the engine exhaust, it reduces nitrogen oxide to nitrogen and water. The efficiency of this process depends on a precise metering of the amount of urea that is injected, which in turn necessitates a measurement of the urea concentration. Urea sensors should therefore measure the quality, level, and temperature of the urea solution in the tank.

A suitable technique for measuring these variables is the ultrasonic sensing principle. For instance, a measuring cell of the urea sensor may contain two piezo ceramics which both emit and detect ultrasonic wave signals. By measuring both the ultrasonic wave's vertical time of travel until it reaches the surface of the liquid and its horizontal propagation speed in the solution, the level and the quality of the solution can be calculated. Such a sensor may utilize the effect that ultrasonic waves move faster in a solution with greater urea content for determining the urea concentration in the solution based on the speed of the ultrasonic signal.

US 2011/301883 A1 relates to a system and method for performing a diagnostic assessment of an ultrasonic sensor that measures a fluid level. A PWM signal is generated based on a reflection of an ultrasonic signal output by the ultrasonic sensor. The PWM has a period, and a plurality of pulses. Each pulse encodes a predetermined parameter and has a width. The PWM signal encodes the fluid level, fluid temperature, fluid speed of sound, and a status of the ultrasonic transducer. The PWM signal is received at a processor. The processor performs the diagnostic assessment of the ultrasonic sensor based on the period of the PWM signal and the widths of the plurality of pulses of the PWM signal. The processor is able to detect time reference shifts by assessing the PWM signal

EP 2 348 326 A2 relates to a current sensor unit and to a method for signal and/or data transfer. The sensor unit has a detection module i.e. analog-digital converter, for detecting a measured quantity i.e. current, and a modulation module for modulating frequency pulse width. A potential-free transmission module has an optical and/or magnetic transmission path, an opto-coupler and/or a fiber optic cable. The modulation module performs coding of 8 bits of measuring signals in pulse width and in frequency, respectively. The detection module detects voltage proportional to current detected at a shunt and includes a programmable amplifier to achieve high resolution. An independent claim is also included for a method for transmitting signal and/or data.

US 2012/118059 A1 relates to a system for determining a quality and/or depth of a fluid in a tank. The system includes a controller, one or more transducers, and a temperature sensor. A fixed distance transducer transmits a sound wave toward a fixed surface. A depth transducer transmits a sound wave which reflects off a surface of the fluid. The temperature sensor senses a temperature of the fluid in the tank and provides an indication of the temperature to the controller. The controller measures the elapsed time for the sound waves to travel between the fixed distance transducer and a fixed surface and the elapsed time for the sound waves to travel between the depth transducer and the surface of the fluid held within the container. Using the elapsed times and the temperature of the fluid, the controller is able to determine a quality and the depth of the fluid.

In particular for more complex sensing applications, such as with urea sensors in a vehicle, the information about a plurality of measured variables has to be communicated from the sensing site to a central control unit, i. e. the destination device, which further processes the information. This transmission has to be fast, reliable and robust against disturbances.

This object is solved by the subject matter of the independent claims. Advantageous embodiments of the present invention are the subject matter of the dependent claims.

The present invention is based on the idea that by encoding the sensor output signals with a pulse width modulation protocol that has a variable pulse width and in addition also a variable total period, two sensor signals can be encoded within one variable time frame. More specifically, a method of transmitting sensor signals from a transducer unit to an evaluation unit comprises the following steps: measuring at least one first and one second measured variable by means of a sensor unit and generating a sensor output signal indicative of the measured variable, calculating a total period and a pulse width of a pulse width modulated (PWM) signal, said total period being indicative of said first measured variable and said pulse width being indicative of said second measured variable, transmitting the PWM signal to the evaluation unit.

Directly derivable from the total period and the pulse width is the duty cycle DC which depends from the total period T and the pulse duration (also referred to as pulse width or active time of the signal) *TH* according to equation (1).

$$DC = \frac{TH}{T} \cdot 100\% \qquad (1)$$

Consequently, when encoding a sensor output signal, first the total period may be calculated mirroring the first measured variable. Next, the duty cycle DC is calculated dependent on the second measured variable. Based on these two values and using equation (1), the pulse duration is calculated.

This encoding scheme is advantageous because PWM signals can be generated with high resolution and accuracy. Moreover, PWM signals are robust against disturbances because for an error free reception it is sufficient that the destination device is able to distinguish the high and low signal levels even if the intensity of the signal is impaired by the transmission process.

On the receiving side, a method of receiving sensor signals from a transducer unit by an evaluation unit according to the present invention comprises the steps of receiving a pulse width modulated (PWM) signal which forms said transducer output signal, determining at least one total period and at least one pulse width of the PWM signal, calculating a first and a second measured variable from said total period and said pulse width, said total period being indicative of said first measured variable and said pulse width being indicative of said second measured variable.

As already mentioned, the evaluation unit only needs to distinguish the high and low signal levels in order to be able to decode the information about the measured variables correctly. Any damping or distortion of the signal intensity due to the influences of the communication link will not impair the accuracy of the signal.

In particular, for the signal decoding first the duration of an ON time TH and an OFF time TL of the signal is determined. The total period is the sum of the ON time and the OFF time and is calculated according to equation (2):

$$T = TH + TL \qquad (2)$$

From the measured value of TH and the calculated value of T, the duty cycle DC can be calculated using equation (1). Finally, from the value of the total period T the first measured variable is obtained and from the value of the duty cycle the second measured variable is obtained.

According to an advantageous embodiment, the PWM signal comprises at least a first and a second time frame which are transmitted alternately, wherein the first time frame comprises a first total period being indicative of a first measured variable and a first pulse width being indicative of a second measured variable, and wherein the second time frame comprises a second total period being indicative of a third measured variable and a second pulse width being indicative of a fourth measured variable. In this manner, four different sensor output signals representing four different measured variables can be transmitted by two alternating time frames of the PWM signal.

It is clear for a person skilled in the art that any other number *n* of sensor signals can also be encoded and decoded according to the present invention by using a correspondingly higher number of alternating time frames. Of course, the complexity and time consumption of the encoding and decoding procedures increase with the number of interleaving time frames. Advantageously, each time frame is used for representing one pair of sensor output signals by the particular total period *Tn* and the pulse width *TnH.* However, when an odd number of sensor output signals has to be encoded, of course only one of the two parameters can be used in a particular one of the alternating time frames, the respective other parameter being chosen arbitrarily. In this case, for instance the non-used period can allow for a compensation of other periods and then cancel both oscillator deviation effects. For example, if the transducer unit with a 1% oscillator error generates a 500 ms period, the period is in fact 505 ms. The evaluation unit with a 1% oscillator error reads 510 ms and then is able to calculate the global error 2% to apply to other periods.

In order to be able to safely recognize the particular time frames during the decoding procedure and to accordingly synchronize the decoding, the first total period is limited to a maximum value which is smaller than a minimum value of said second total period. Preferably, the maximum value of the first total period is smaller than the minimum value of the second total period with an additional safety margin. Thus, it can be ensured with sufficient reliability that the synchronization is performed correctly.

The advantages of the PWM sensor signal transmission can be used in a particularly effective way with a urea sensor that is applicable with an SCR system in a vehicle. Consequently, according to an advantageous implementation of the encoding and decoding method of the present invention, said measured variables comprise a urea concentration, a fluid level in a tank, a temperature of said fluid, and/or a status variable indicative of a status of said sensor unit.

There is a plurality of possible status variables that can be evaluated according to the present invention. For instance, it can be detected whether the level sensor is short-circuited to ground or in an open circuit condition. A timeout can be provided for the case that the level sensor is unable to calculate the level. Regarding the temperature sensor, the status variable can indicate whether the temperature sensor is short-circuited to ground or in an open circuit condition and whether the actual temperature is out of the specified admissible range. Status variables that relate to the urea concentration sensor may for instance indicate whether the urea sensor is short-circuited to ground or in an open circuit condition. A timeout may be provided and after a particular timeout threshold has been exceeded it can be indicated that the concentration cannot be calculated. Furthermore, status variables may indicate that air and/or ice have been detected and/or that the urea concentration is out of the specified admissible range.

The present invention further relates to a transducer unit for providing an electrical transducer output signal from at least a first and a second measured variable. The transducing unit comprises a sensor unit which is operable to measure the first and second measured variables and to generate a first and second sensor signal indicative of said first and second measured variable, and a sensor transceiver unit which is operable to generate an encoded output signal for being transmitted via a communication line to an evaluation unit. According to the present invention, the sensor transceiver unit comprises a sensor interface that is operable to calculate a total period and a pulse width of a pulse width modulated (PWM) signal, said total period being indicative of said first measured variable and said pulse width being indicative of said second measured variable.

Such a transducing unit advantageously uses the PWM technique with all its advantages for generating an output signal that can be transmitted to an evaluation unit via any suitable communication line. The transducer output signal is accurate and robust against external disturbances that may occur along the communication line.

In order to transmit the information about four different measured variables, the sensor unit is operable to generate a plurality of sensor signals, and wherein said sensor interface is operable to generate the PWM signal comprising at least a first and a second time frame which are transmitted alternately, wherein the first time frame comprises a first total period being indicative of a first measured variable and a first pulse width being indicative of a second measured variable, and wherein the second time frame comprises a second total period being indicative of a third measured variable and a second pulse width being indicative of a fourth measured variable. This interleaved encoding scheme has the advantage that it makes an efficient use of the transmission time and accuracy. It is clear for a person skilled in the art that also more than two different time frames can be interleaved by the transducer unit according to the present invention, so that the values relating to more than four measured variables can be transmitted to an evaluation unit.

According to a further advantageous embodiment, the transducer unit comprises a quartz oscillator for timing the PWM signal. Such a quartz oscillator can provide a high resolution transmission using the total period for encoding a measured variable. Of course for a low resolution system, a quartz oscillator is not mandatory. The duty cycle is accurate without using a quartz due to the fact that it is calculated as the ratio of the pulse duration and the total period as defined in equation (1).

Optionally, the transducer unit may further comprise a 32-bit timer for generating the PWM signal in order to further improve the resolution.

According to the present invention, the sensor unit may comprise a plurality of different sensor each measuring one or more measured variables. For instance for the application in an SCR system, the sensor unit may comprise an ultrasonic level sensor, an ultrasonic urea concentration sensor, and a temperature sensor. Ultrasonic level sensors and ultrasonic urea sensors are well known in the art and may for instance be based on a piezoelectric detection principle. For instance, the company TE connectivity offers several types of DEF SCR sensors that are based on a piezoelectric sensing principle. However, it is clear for a person skilled in the art that the encoding, transmission and decoding scheme according to the present invention can be used with any other kind of sensor as well.

In order to control electrical power that is needed for the operation of the sensor unit and the components responsible for the signal conditioning and transmission, the transducer unit may comprise a power management unit for providing electrical power to said transducer unit. The electrical power may be transmitted to the transducer unit from an external power source, such as the battery of a vehicle. Alternatively or additionally, the transducer unit may comprise an energy harvesting unit to generate the energy directly at the site of the transducer unit from local temperature gradients, vibrations, or the like.

The present invention also relates to an evaluation unit for evaluating an electrical output signal indicative of at least a first and a second measured variable. The evaluation unit comprises a destination transceiver unit which is connectable to a communication line and is operable to receive an encoded output signal transmitted via the communication line from a transducer unit and to generate a decoded output signal, and a destination device connected to the destination transceiver unit and being operable to evaluate said decoded output signal indicative of said first and second measured variable. According to the present invention, the encoded output signal is a pulse width modulated (PWM) signal, and wherein said destination transceiver unit is operable to measure at least one total period and at least one pulse width of the PWM signal, to calculate from said total period said first measured variable and to calculate from said pulse width said second measured variable.

As already mentioned above, due to the PWM principle, the evaluation unit is able to accurately recover the information about the measured variables from the received encoded output signal without needing extensively complex equipment.

Finally, the present invention also is intended to encompass a system that comprises at least one transducer unit and at least one evaluation unit according to the present invention. Although in the following always one transducer unit is shown communicating with on evaluation unit, it is clear for a person skilled in the art that any number of transducer units communicating with an arbitrary number of evaluation units can be envisaged according to the present invention. In particular in the application environment of a vehicle, a control device that acts as the evaluation unit may be connected to a plurality of different transducer units, e. g. relating to the SCR system, to the exhaust gases, and external measurands, such as the outside temperature. On the other hand, the information about the variables measured by one particular transducer unit may be needed by more than one evaluation unit.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form individually or in different combinations solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:

FIG. 1      is a schematic representation of a sensor system according to the present invention;

FIG. 2      is a schematic representation of a transducer unit according to the present invention;

FIG. 3      is a schematic illustration of a PWM signal as generated by the transducer unit of Fig. 2;

FIG. 4      is a flow chart illustrating the encoding procedure according to an exemplary embodiment of the present invention;

FIG. 5      is a flow chart illustrating the decoding procedure according to an exemplary embodiment of the present invention.

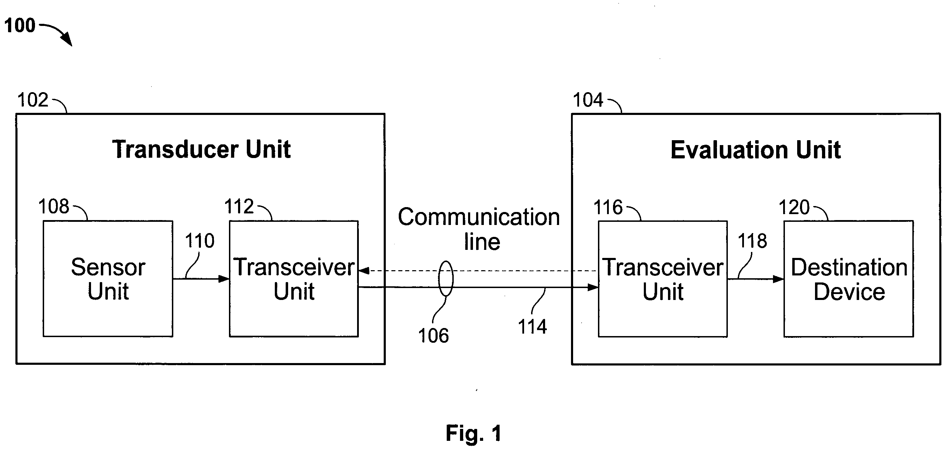

The present invention will now be explained in more detail with reference to the Figures. Fig. 1 illustrates a sensor system 100 according to the present invention. The sensor system comprises a transducer unit 102 and an evaluation unit 104 which are interconnected by means of a communication line 106. The transducer unit 102 comprises a sensor unit 108 that measures at least two different measurands (also referred to as a measured variables) and generates a sensor output signal 110 that is indicative of the measured variables. A transceiver unit 112 is connected to the sensor unit 108, receives the sensor output signal 110, and transforms it into a transducer output signal 114 which is transmitted via the communication line 106 to the evaluation unit 104.

The evaluation unit 104 comprises a transceiver unit 116 that is connected to the communication line 106 for receiving the transducer output signal 114. The transceiver unit decodes the transducer output signal 114 and generates a decoded signal 118 therefrom that is input into the destination device 120. Although usually only a monodirectional communication is performed from the transducer unit 102 towards the evaluation unit 104, of course also a bidirectional communication can be provided as indicated by the arrow with a broken line of the communication line 106. In particular, for specific needs (e. g. bootloader, calibration, diagnostic) the PWM output wire can be configured as a bidirectional one wire communication.

According to the present invention, the communication between the transducer unit 102 and the evaluation unit 104 takes place via a pulse width modulated (PWM) signal containing the information about the at least two different measured variables. More specifically, a total period and a pulse width of the PWM signal are determined in a way that the total period is indicative of the first measured variable and the pulse width is indicative of the second measured variable.

This encoding scheme is advantageous because PWM signals can be generated with high resolution and accuracy. Moreover, PWM signals are robust against disturbances because for an error free reception it is sufficient that the destination device is able to distinguish the high and low signal levels even if the intensity of the signal might be impaired by the transmission process.

In an exemplary application environment, the transducer unit 102 is part of a selective catalytic reduction (SCR) system and performs e. g. based on an ultrasonic measurement an analysis of the Diesel Exhaust Fluid (DEF) fluid to provide the information about the urea concentration and a secure misfilling protection. As this is known in the art, in the SCR system the DEF is injected from a tank into the exhaust stream upstream of an SCR catalytic converter. The injected urea is converted via thermolysis and hydrolysis into ammonia. Inside the SCR catalytic converter, the ammonia then reduces the nitrogen oxides into water and nitrogen. For ensuring a proper functioning at least the tank's filling level, the quality and in particular the urea concentration of the DEF, and the temperature have to be monitored. Consequently, the sensor unit 108 may comprise a piezoelectric fluid quality sensor, a piezoelectric level sensor, and a temperature sensor for measuring the temperature of the fluid. On the receiving side, the evaluation unit 104 may for instance comprise a destination device 120 that is formed by a diesel engine control unit (DCU). The DCU performs an evaluation of the decoded signal 118 and controls a dosing module that injects the DEF into the exhaust stream. Depending on the measured temperature heating systems for heating the tank can be actuated if necessary. For instance, DEF freezes below -11°C, then a heater is required.

By using a PWM signal according to the present invention a particularly accurate, robust, and fail safe data transmission from the sensor unit to DCU can be ensured which is of particular relevance in the rough application environment of a vehicle.

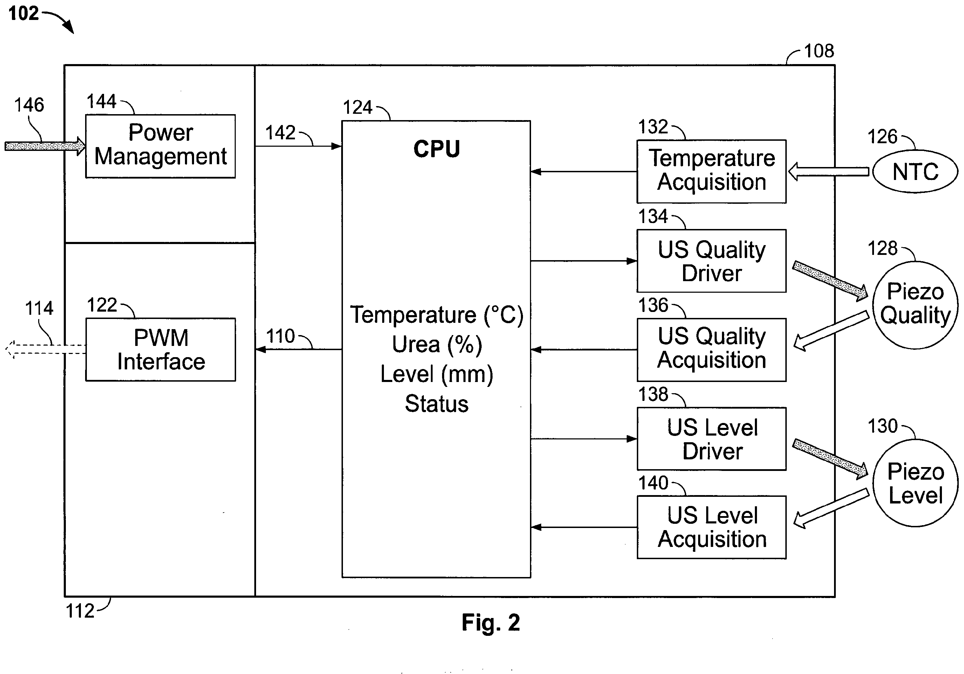

Fig. 2 illustrates the transducer unit 102 in the exemplary embodiment of a piezoelectric sensing unit applicable in an SCR system. It has to be understood, however, that the invention is not limited in its application to the details of construction and the arrangement of components as set forth in this example. The invention is capable of other embodiments and of being practiced or of being carried out in various ways, in particular for use with any other transducing principle and sensor application as well.

As shown in Fig. 2, the transducer unit 102 comprises a sensor unit 108 which monitors the temperature, the quality (in particular the urea concentration), and the level of the DEF inside the tank. For measuring the temperature, the sensor unit is connected to an external temperature sensing element 126. The temperature sensing element 126 may for instance be a thermistor with a negative temperature coefficient (NTC). However, it is clear for a person skilled in the art that any suitable type of temperature sensing element can be used according to the present invention. For instance, said temperature sensing element may comprise a resistive temperature detector (RTD), a thermistor with positive temperature coefficient (PTC), a thermocouple, or a silicon-based temperature sensor.

A quality sensor 128 is provided to determine the quality of the urea solution, in particular the percentage of the urea content. Usually a concentration of 32.5% urea in water is required for SCR systems. For instance, the quality sensor 128 may be based on an ultrasonic detection principle. A piezoelectric sensor element sends an ultrasonic signal towards a surface with a known distance and receives a reflection of the ultrasonic signal from this surface. The distance must be very stable because 100 $\mu$m mean approximately 1% of urea. Consequently, a reflector is mounted in front of the piezo and a calibration is performed during the manufacturing process for mechanical tolerance. Based on an analysis of the velocity of the reflected ultrasonic signal (also referred to as echo) and the temperature, the urea content in the DEF can be determined. This is due to the fact that the damping characteristics of the fluid change with the urea concentration and the temperature, and therefore the speed of the signal is influenced.

Using the same piezoelectric sensor element or an additional piezoelectric sensor element as a level sensor 130, an ultrasonic signal is sent towards the surface of the fluid in the tank and receives a reflection of the ultrasonic signal from the surface of the fluid. The time-of-flight until the reflected ultrasonic signal is detected can be evaluated for measuring the fluid level inside the tank. The time between the transmitted ultrasonic pulse and the received echo is proportional to the distance the sound waves travel through the liquid as expressed by the following equation (3), using the actually measured speed.

$$Distance = Speed \cdot \frac{Time-of-flight}{2} \hspace{4cm} (2)$$

When arranging the piezoelectric sensor element at a known position, for instance at the bottom of the tank, this distance is correlated to the level of the liquid. This time-of-flight measurement principle has the advantage that no movable mechanical parts, such as floaters or the like, are involved.

For retrieving a measured value of the temperature the sensor unit 108 comprises a temperature acquisition unit 132. For operating the quality sensor 128, the sensor unit 108 comprises a driver unit 134. The measured value of the quality sensor 128 is retrieved by a quality acquisition unit 136. Furthermore, the sensor unit 108 comprises a level driver unit 138 and a level acquisition unit 140 for driving the quality sensor 128 and retrieving the measured value, respectively. As already mentioned above, only one driver unit 134, 138 and one acquisition unit 136, 140 can be provided for measuring both the fluid quality and level.

The operations of the sensor unit 108 are coordinated by a central processing unit (CPU) 124. A power management unit 144 receives electrical power 146 from an external power supply and provides an internal power supply 142 to the CPU 124. The external power input may be performed in a wirebound or wireless manner, for instance via inductive coupling. The power management unit 144 may of course also comprise power storing means, such as batteries or super caps, or may comprise means for energy harvesting from vibrations or temperature gradients at the site of the transducer unit 102.

The CPU 124 receives the signals from the temperature acquisition unit 132, the quality acquisition unit 136, and the level acquisition unit 140 and calculates therefrom measured values, for example the temperature in °C, the urea concentration in % and the fluid level in the tank in mm. Furthermore, the CPU 124 is operable to determine a status variable (also called diagnostic code) which indicates the status of the sensor elements as an 8 bit data word. Each of the bits is set to "1" if the respective status condition has occurred.

For instance, the status variable may contain the information that is summarized in Table 1.

**Table 1**

| Sensor | Type of status | Bit | Value | Description |
|---|---|---|---|---|
| Level | HW | 0 | 1 | Level sensor short to GND or open circuit |
| | Transducer | 1 | 2 | Unable to calculate level (if more than x seconds) |
| Temperature | HW | 2 | 4 | Temperature sensor short to GND or open circuit |
| | Specifications | 3 | 8 | Temperature out of range |
| Concentration | HW | 4 | 16 | Quality sensor short to GND or open circuit |
| | Transducer | 5 | 32 | Unable to calculate concentration (if more than x seconds) |
| | Fluid | 6 | 64 | Air or ice detected by ultrasonic transducer |
| | Fluid | 7 | 128 | Concentration out of range |

In particular, bits 0, 2, and 4 indicate that the belonging sensor is short-circuited to ground or in an open circuit condition. Bits number 1 and 5 are set to "1" and thus representing the respective value of 2 and 32, respectively, if a predetermined timeout duration (x seconds) has been exceeded and no valid measurement value could be provided by the sensor element. In case, that the CPU 124 determines that the temperature and/or the concentration are out of range the respective bits 3 and/or 7 are set. Bit 6, finally, indicates if air or ice have been detected by the ultrasonic transducer.

Column 2 of table 1 illustrates the type of status that is described by the respective value. For instance, bits 0, 2, and 4 relate to electrical failure ("HW" signifies hardware related problems), whereas bits 1 and 5 indicate problems which relate to algorithm failures when processing the signals from the sensor elements. Bit number 3 indicates that the value is above the specified application limits and bits 6 and 7 relate to the quality of the fluid. in particular, the urea concentration needs to be within a concentration range of 0% to 70%.

Different actions have to be taken depending on which status bit has been set. In particular, when an error relating to a sensor element has been detected, the corresponding sensor output value is set to the minimum.

The CPU 124 outputs the values for the temperature, the urea concentration, the fluid level, and the status as a sensor output signal 110.

According to the present invention, the transducer unit 102 further comprises a transceiver unit 112 with a PWM interface 122. The PWM interface 122 outputs the transducer output signal 114 which is generated based on the sensor output signal 110. The sensor output signal 110 is provided by the CPU 124. Consequently, the PWM interface 122 converts the sensor output signal 110 into a PWM signal according to the present invention.

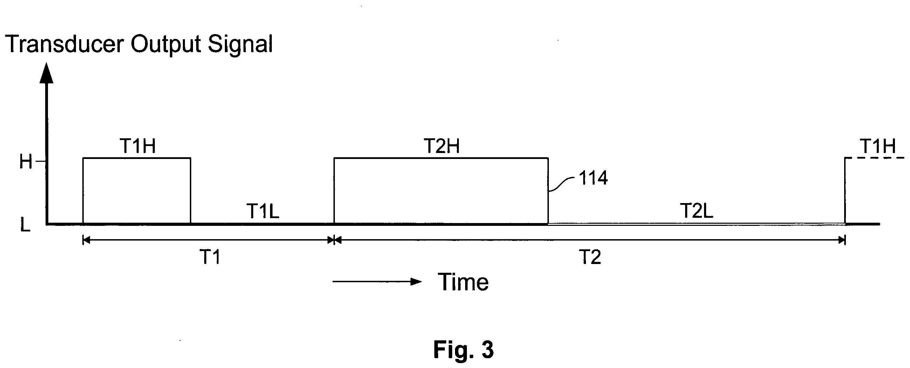

With reference to Fig. 3 the particular PWM signal according to the present invention will be explained in more detail. According to an exemplary embodiment the signal shown in Fig. 3 is adapted to encode the sensor output signal 110 generated by the CPU 124 of Fig. 2. However, it is intended that the present invention also encompasses the encoding of less or more than four sensor signals in different application environments.

As depicted in Fig. 3, two PWM signal are alternately transmitted as the transducer output signal 114 over time. Each of the two PWM signals has a variable total period T1, T2 and a variable pulse width T1H, T2H. For instance, data representing the temperature, the level, the concentration, and a diagnostic value according to Table 1 may be encoded and transmitted by the transducer output signal 114. According to an advantageous embodiment, the concentration is mirrored by the total period T1 of a first time frame and the diagnostic value is correlated to the total period T2 of a second time frame. Moreover, the temperature is encoded as the duty cycle DC1 of the first time frame and is correlated to the pulse width T1H according to the following equation (4).

$$DC1 = \frac{T1H}{T1} \qquad\qquad (4)$$

The fluid level in the tank may for instance be encoded as the duty cycle DC2 of the second time frame and is correlated to the pulse width T2H according to the following equation (5).

$$DC2 = \frac{T2H}{T2} \qquad\qquad (5)$$

Consequently, the PWM transducer output signal 114 shown in Fig. 3 contains the information about four independent variables encoded in two interleaved PWM signals with variable pulse widths T1H, T2H and variable total periods T1, T2. In order to ensure that the PWM signal can easily and safely be decoded at the receiver side, the maximum possible value T1max of the total period T1 should be smaller (preferably including a safety margin) than the minimum possible value T2min of the total period T2.

The following Table 2 summarizes the encoding scheme.

**Table 2**

| Measured variable | Coding |
|---|---|
| Temperature | $DC1 = \dfrac{T1H}{T1}$ |
| Level | $DC2 = \dfrac{T2H}{T2}$ |
| Concentration | T1 |
| Diagnostic variable | T2 |

Depending on the required measurement ranges and measurement resolutions for the exemplary measured variables in an SCR system, different requirements have to be met by the PWM encoding protocol. In particular, the transducer unit and the evaluation unit must be able to generate and read the PWM signal with a sufficient accuracy in order to distinguish two consecutive values of the measured variables.

For example, two consecutive temperature values which have to be distinguished are 25.0 °C and 25.25 °C. The temperature is encoded as the duty cycle DC1 (see Table 2) and the measurement range lies between -40°C and +85°C. This means, that the two duty cycle values corresponding to 25.0 °C and 25.25 °C are 51.6% and 51.76%. The absolute time value of the duty cycle DC1 depends on the period T1. The shortest time value for the period T1 is assigned to a concentration of 0% urea and is 100 ms. In this (worst) case, 51.6% and 51.76% correspond to 51.6 ms and 51.76 ms for T1H, respectively. Therefore, a step of 160 µs has to be distinguishable.

This is the reason why the level which has a larger number of different values (also called points in the following) has to be associated with the status which has the longest period (500ms minimum).

For the temperature, the measurement range lies between -40°C and +85°C. A measurement resolution of 0.25 °C is required. Consequently, a duty cycle range of between 10% and 90% is advantageous. The required resolution of the duty cycle must be less than 0.1%, so that at least 500 points are required. The value for the fluid level lies between 15 mm and 400 mm. The required measurement resolution is 0.25 mm. Accordingly, the duty cycle has to be variable between 10% and 90% with a resolution of less than 0.05%. Consequently, at least 1540 points are needed.

The concentration of urea in the DEF is within a range of 0% to 70% with a measurement resolution of 0.25%. Consequently, the range of the pulse width T1 should be between 100 ms and 380 milliseconds with a resolution of 1 ms. Accordingly, 280 points are needed for the conversion step. As already mentioned above, the diagnostic variable is an 8 bit word and has to be measured with a resolution of one bit. Advantageously, the value of the pulse width T2 encoding the diagnostic value lies between 500 ms and 755 ms. The resolution should be 1 ms and therefore 256 points will be needed for the conversion.

For the high-resolution conversion of the concentration value and the diagnostic value into the total period of the PWM signal, a quartz can be used to generate an accurate PWM signal. Furthermore, a 32-bit timer can be employed to achieve the required resolution. On the other hand, the duty cycle is based on the ratio of the pulse width and the total period and therefore is accurate even without a quartz. A high definition timer is required for high resolution communication in any case.

When referring back to Table 1 the diagnostic status "Temperature out of range" can be encoded as T2 = (8 + 500) ms = 508 ms. Further, the diagnostic status "Temperature out of range" and "Unable to calculate concentration" can be encoded as T2 = (8 + 32 + 500) ms = 540 ms. As already mentioned above, when an error relating to a sensor element has been detected, the corresponding sensor output value is set to the minimum. This is for instance a value for DC2 and DC1 of 10% for the fluid level or the temperature, respectively, and T1 = 100 ms for the urea concentration.

According to the present invention, the following generic transfer functions may be used for encoding the sensor output signal 110 shown in Fig. 2, generating the PWM transducer output signal illustrated in Fig. 3.

The generic transfer function for the period is given in equation (6):

$$\text{period} = (\text{value} - \text{VALUE\_MIN}) * (\text{PERIOD\_MAX} - \text{PERIOD\_MIN}) / (\text{VALUE\_MAX} - \text{VALUE\_MIN}) + \text{PERIOD\_MIN} \tag{6}$$

For encoding the urea concentration, the following values are for instance chosen:

PERIOD_MIN = 100 ms
PERIOD_MAX = 380 ms
VALUE_MIN = 0 %
VALUE_MAX = 70 %

Furthermore, the generic transfer function for the duty cycle is calculated according to equation (7):

$$\text{DC} = (\text{value} - \text{VALUE\_MIN}) * (\text{DUTY\_CYCLE\_MAX} - \text{DUTY\_CYCLE\_MIN}) / (\text{VALUE\_MAX} - \text{VALUE\_MIN}) + \text{DUTY\_CYCLE\_MIN} \tag{7}$$

wherein:

DUTY_CYCLE_MIN = 10 %
DUTY_CYCLE_MAX = 90 %

For encoding the temperature, the following values may be assumed:

VALUE_MIN = -40 °C
VALUE_MAX = 85 °C

Based on these particular values, the duty cycle DC1 (in %) can be calculated from the Temperature value (in °C) according to equation (8).

$$DC1 = (Temperature + 40) \cdot \frac{80}{85+40} + 10 \tag{8}$$

The duty cycle DC2 (in %) is calculated from the measured level value according to equation (9).

$$DC2 = (Level - 15) \cdot \frac{80}{400-15} + 10 \tag{9}$$

Further, the total period T1 (in ms) is determined according to the following equation (10).

$$T1 = (Concentration \cdot \frac{280}{70}) + 100 \tag{10}$$

Finally, the total period T2 (in ms) is calculated from the diagnostic value according to the following equation (11).

$$T2 = Diagnostic + 500 \tag{11}$$

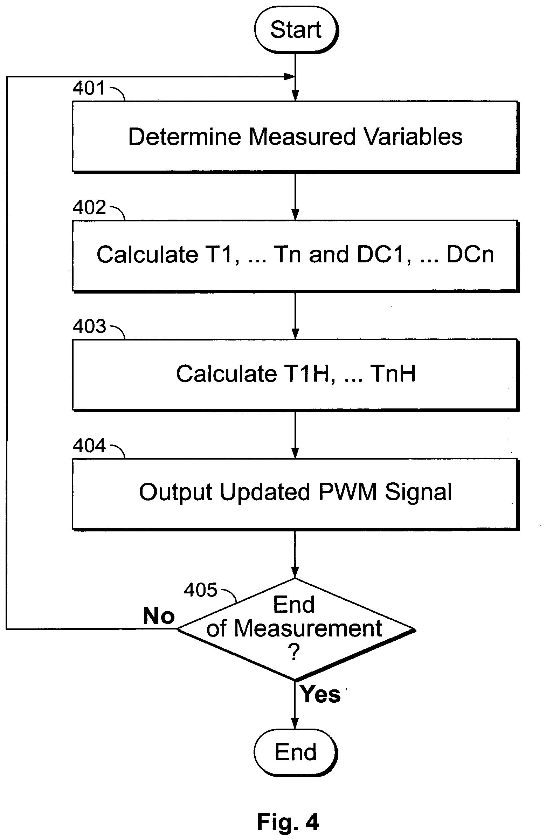

Fig. 4 illustrates the procedure of encoding a plurality of measured variable into a PWM signal according to the present invention as a flowchart. The encoding starts with determining at least two measured variables in step 401. Based on the measured variables, at least one value for a total period and one value for a duty cycle are calculated in step 402. According to the embodiment shown in Fig. 3, two different total periods T1 and T2 and two duty cycles DC1 and DC2 are calculated. However, it is clear for a person skilled in the art that the PWM signal according to the present invention may also be generated only for one pair of measured variables or for an arbitrary number n of pairs of measured variables.

In step 403 the actual ON and OFF times of the PWM signal are calculated by calculating the pulse width TnH from the belonging total period Tn and the duty cycle DCn.

In step 404, an updated PWM signal is output as the transducer output signal 114 in a way that the total period and pulse width encoding a first pair of measured variables always alternates with the total period and pulse width relating to a second pair and any further pair of measured variables. By such an interleaving transmission of time frames, a fast and efficient signal transmission can be achieved.

In step 405 it is checked whether the end of the measurement has been reached. If so, the procedure ends. If not, the next set of determined measured variable is encoded by returning to step 401.

Using the exemplary transfer functions given in equations (8) to (10), a specific example of encoded values will be given in the following. Assuming that the measured variables comprise a temperature of 25°C, a level of 100 mm, a urea concentration of 32%, and a status code having the value of 00000001 (meaning that the level sensor has a short to ground or an open circuit), the following values can be calculated in step 402:

DC1 = 51.6 %
DC2 = 27.65 %
T1 = 228 ms
T2 = 501 ms

Consequently, in step 403 the calculated pulse widths are:
T1H = 117.6 ms and T2H = 138.5 ms.

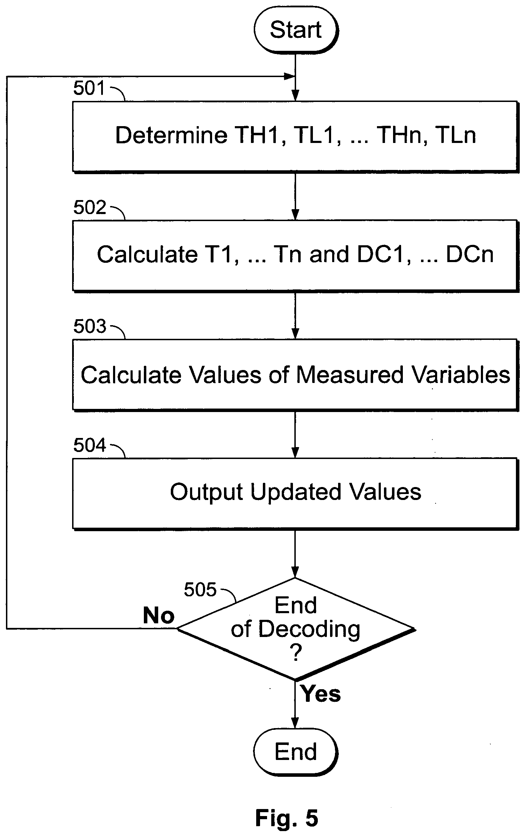

On the receiver side, a decoding procedure takes place as depicted in Fig. 5. In particular, in step 501 the ON and OFF times of the received PWM signal 114 are determined. These ON and OFF times are for instance indicated as T1H (the pulse width) and T1L in Fig. 3.

In step 502 the values of the total period and the duty cycle are calculated from the ON time (the pulse width) and the OFF time, using equations (1) and (2) given above.

In step 503 the values of the measured variables are calculated based on the accordingly reordered transfer functions which have been used for the encoding. For the specific example of the urea sensor explained above, equations (8) to (11) apply and have to be solved for the temperature, the level, the concentration, and the diagnostic code:

From equation (8), the following expression results for the temperature (in °C), DC1 in %.

$$Temperature = \frac{(85+40) \cdot (DC1-10)}{80} - 40 \qquad (8')$$

From the duty cycle DC2 (in %) the level is calculated (in mm) according to equation (9').

$$Level = \frac{(400-15) \cdot (DC2-10)}{80} + 15 \qquad (9')$$

Further, from the total period T1 (in ms) the concentration (in %) is determined according to the following equation (10').

$$Concentration = 70 \cdot \frac{T1-100}{280} \qquad (10')$$

Finally, from the total period T2 (in ms) the diagnostic code is calculated according to the following equation (11').

$$Diagnostic = T2 - 500 \qquad (11')$$

Referring back to Fig. 5, in step 504 these values are output as updated values. In step 505 it is determined whether the decoding should be ended. If so, the procedure ends. If not, the next set of determined ON and OFF times is decoded by returning to step 501.

**REFERENCE NUMERALS**

| Reference Numeral | Description |
|---|---|
| 100 | Sensor system |
| 102 | Transducer unit |
| 104 | Evaluation unit |
| 106 | Communication line |
| 108 | Sensor unit |
| 110 | Sensor output signal |
| 112 | Transceiver unit (of transducer unit) |
| 114 | Transducer output signal |
| 116 | Transceiver unit (of evaluation unit) |
| 118 | Decoded signal |
| 120 | Destination device |
| 122 | PWM interface |
| 124 | CPU |
| 126 | Temperature sensor |
| 128 | Quality sensor |
| 130 | Level sensor |
| 132 | Temperature acquisition unit |
| 134 | Quality driver unit |
| 136 | Quality acquisition unit |
| 138 | Level driver unit |
| 140 | Level acquisition unit |
| 142 | Internal power supply |
| 144 | Power management unit |
| 146 | External electrical power supply |

**Claims**

1. Method of transmitting a transducer output signal (114) from a transducer unit (102) to an evaluation unit (104), said method comprising the following steps:

   measuring at least one first and one second measured variable by means of a sensor unit (108) and generating a sensor output signal (110) indicative of the measured variable,
   calculating a total period (Tn) and a pulse width (TnH) of a pulse width modulated, PWM, signal, said total period (Tn) being indicative of said first measured variable and said pulse width (TnH) being indicative of said second measured variable,
   transmitting the PWM signal as said transducer output signal (114) to the evaluation unit (104).

2. Method of decoding a transducer output signal (114) received from a transducer unit (102), said method comprising the following steps:

   by means of an evaluation unit (104), receiving a pulse width modulated, PWM, signal which forms said transducer output signal (114),
determining at least one total period (Tn) and at least one pulse width (TnH) of the PWM signal,
calculating a first and a second measured variable from said total period and said pulse width, said total period being indicative of said first measured variable and said pulse width being indicative of said second measured variable.

3. Method according to claim 1 or 2, wherein the PWM signal comprises at least a first and a second time frame which are transmitted alternately, wherein the first time frame comprises a first total period (T1) being indicative of a first measured variable and a first pulse width (T1H) being indicative of a second measured variable, and wherein the second time frame comprises a second total period (T2) being indicative of a third measured variable and a second pulse width (T2H) being indicative of a fourth measured variable.

4. Method according to claim 3, wherein said first total period (T1) is limited to a maximum value which is smaller than a minimum value of said second total period (T2).

5. Method according to one of the claims 1 to 4, wherein said measured variables comprise a urea concentration, a fluid level in a tank, a temperature of said fluid, and/or a status variable indicative of a status of said sensor unit.

6. Transducer unit for providing an electrical transducer output signal (114) from at least a first and a second measured variable, wherein the transducer unit (102) comprises:

   a sensor unit (108) which is operable to measure the first and second measured variables and to generate a first and second sensor signal indicative of said first and second measured variable;
   a sensor transceiver unit (112) which is operable to generate said transducer output signal (114) for being transmitted via a communication line (106) to an evaluation unit (104), wherein said sensor transceiver unit (112) comprises an interface unit (122) that is operable to calculate at least one total period (Tn) and at least one pulse width (TnH) of a pulse width modulated, PWM, signal, said total period being indicative of said first measured variable and said pulse width being indicative of said second measured variable.

7. Transducer unit according to claim 6, wherein the sensor unit (108) is operable to generate a plurality of sensor signals (110), and wherein said interface unit (122) is operable to generate the PWM signal comprising at least a first and a second time frame which are transmitted alternately, wherein the first time frame comprises a first total period (T1) being indicative of a first measured variable and a first pulse width (T1H) being indicative of a second measured variable, and wherein the second time frame comprises a second total period (T2) will being indicative of a third measured variable and a second pulse width (T2H) being indicative of a fourth measured variable.

8. Transducer unit according to claim 6 or 7, further comprising a quartz oscillator for timing the PWM signal.

9. Transducer unit according to one of the claims 6 to 8, further comprising a 32-bit timer for generating said PWM signal.

10. Transducer unit according to one of the claims 6 to 9, wherein said sensor unit (108) comprises an ultrasonic level sensor (130), an ultrasonic urea concentration sensor (128), and a temperature sensor (126).

11. Transducer unit according to one of the claims 6 to 10, further comprising a power management unit (144) for providing electrical power to said transducer unit (102).

12. Evaluation unit for evaluating an electrical transducer output signal (114) indicative of at least a first and a second measured variable, wherein the evaluation unit comprises:

   a destination transceiver unit (116) which is connectable to a communication line (106) and is operable to receive the encoded transducer output signal (114) transmitted via the communication line (106) from a transducer unit (102) and to generate a decoded signal (118),
   a destination device (120) connected to the destination transceiver unit (116) and being operable to evaluate said decoded signal (118) indicative of said first and second measured variable,
   wherein said transducer output signal (114) is a pulse width modulated, PWM, signal, and
   wherein said destination transceiver unit (116) is operable to measure at least one total period (Tn) and at least one pulse width (TnH) of the PWM signal, to calculate from said total period said first measured variable and to calculate from said pulse width said second measured variable.

**13.** Evaluation unit according to claim 12, wherein the PWM signal comprises at least a first and a second time frame which are transmitted alternately, wherein the first time frame comprises a first total period (T1) being indicative of a first measured variable and a first pulse width (T1H) being indicative of a second measured variable, and wherein the second time frame comprises a second total period (T2) being indicative of a third measured variable and a second pulse width (T2H) being indicative of a fourth measured variable.

**14.** Evaluation unit according to claim 12 or 13, wherein said measured variables comprise a urea concentration, a fluid level in a tank, a temperature of said fluid, and/or a status variable indicative of a status of said sensor unit.

**15.** Sensor system comprising at least one transducer unit (102) according to one of the claims 6 to 11, and at least one evaluation unit (104) according to one of the claims 12 to 14.

**Patentansprüche**

**1.** Verfahren zum Senden eines Transducer-Ausgabesignals (114) von einer Transducereinheit (102) zu einer Bewertungseinheit (104), wobei das Verfahren die folgenden Schritte umfasst:

Messen wenigstens einer ersten und einer zweiten gemessenen Variable mittels einer Sensoreinheit (108), und Erzeugen eines Sensorausgabesignals (110), das die gemessene Variable angibt,
Berechnen einer Gesamtperiode (Tn) und einer Pulsbreite (TnH) eines pulsbreitenmodulierten (PWM) Signals, wobei die Gesamtperiode (Tn) die erste gemessene Variable angibt und die Pulsbreite (TnH) die zweite gemessene Variable angibt, und
Senden des PWM-Signals als des Transducer-Ausgabesignals (114) zu der Bewertungseinheit (104).

**2.** Verfahren zum Decodieren eines Transducer-Ausgabesignals (114), das von einer Transducereinheit (102) empfangen wird, wobei das Verfahren die folgenden Schritte umfasst:

mittels einer Bewertungseinheit (104), Empfangen eines pulsbreitenmodulierten (PWM) Signals, das das Transducer-Ausgabesignal (114) bildet,
Bestimmen wenigstens einer Gesamtperiode (Tn) und wenigstens einer Pulsbreite (TnH) des PWM-Signals, und
Berechnen einer ersten und einer zweiten gemessenen Variable aus der Gesamtperiode und der Pulsbreite, wobei die Gesamtperiode die erste gemessene Variable angibt und
die Pulsbreite die zweite gemessene Variable angibt.

**3.** Verfahren nach Anspruch 1 oder 2, wobei das PWM-Signal wenigstens einen ersten und einen zweiten Zeitrahmen aufweist, die alternierend gesendet werden, wobei der erste Zeitrahmen eine erste Gesamtperiode (T1), die eine erste gemessene Variable angibt, und eine erste Pulsbreite (T1H), die eine zweite gemessene Variable angibt, aufweist und wobei der zweite Zeitrahmen eine zweite Gesamtperiode (T2), die eine dritte gemessene Variable angibt, und eine zweite Pulsbreite (T2H), die eine vierte gemessene Variable angibt, aufweist.

**4.** Verfahren nach Anspruch 3, wobei die erste Gesamtperiode (T1) auf einen maximalen Wert begrenzt ist, der kleiner als ein minimaler Wert der zweiten Gesamtperiode (T2) ist.

**5.** Verfahren nach einem der Ansprüche 1 bis 4, wobei die gemessenen Variablen eine Harnstoffkonzentration, einen Fluidpegel in einem Tank, eine Temperatur des Fluids und/oder eine Statusvariable, die einen Status der Sensoreinheit angibt, umfassen.

**6.** Transducereinheit zum Vorsehen eines elektrischen Transducer-Ausgabesignals (114) aus wenigstens einer ersten und einer zweiten gemessenen Variable, wobei die Transducereinheit (102) umfasst:

eine Sensoreinheit (108), die betriebsfähig ist zum Messen der ersten und zweiten gemessenen Variablen und zum Erzeugen eines ersten und eines zweiten Sensorsignals, die jeweils die erste und die zweite gemessene Variable angeben,
eine Sensor-Sendeempfängereinheit (112), die betriebsfähig ist zum Erzeugen des Transducer-Ausgabesignals (114) für das Senden über eine Kommunikationsleitung (106) zu einer Bewertungseinheit (104),
wobei die Sensor-Sendeempfängereinheit (112) eine Schnittstelleneinheit (122) umfasst, die betriebsfähig ist zum Berechnen wenigstens einer Gesamtperiode (Tn) und wenigstens einer Pulsbreite (TnH) eines pulsbreitenmodulierten (PWM) Signals, wobei die Gesamtperiode die erste gemessene Variable angibt und die Pulsbreite die zweite gemessene Variable angibt.

7. Transducereinheit nach Anspruch 6, wobei die Sensoreinheit (108) betriebsfähig ist zum Erzeugen einer Vielzahl von Sensorsignalen (110) und wobei die Schnittstelleneinheit (122) betriebsfähig ist zum Erzeugen des PWM-Signals, das wenigstens einen ersten und einen zweiten Zeitrahmen aufweist, die alternierend gesendet werden, wobei der erste Zeitrahmen eine erste Gesamtperiode (T1), die eine erste gemessene Variable angibt, und eine erste Pulsbreite (T1H), die eine zweite gemessene Variable angibt, aufweist und wobei der zweite Zeitrahmen eine zweite Gesamtperiode (T2), die eine dritte gemessene Variable angibt, und eine zweite Pulsbreite (T2H), die eine vierte gemessene Variable angibt, aufweist.

8. Transducereinheit nach Anspruch 6 oder 7, die weiterhin einen Quarzoszillator für das Timing des PWM-Signals umfasst.

9. Transducereinheit nach einem der Ansprüche 6 bis 8, die weiterhin einen 32-Bit-Timer für das Erzeugen des PWM-Signals umfasst.

10. Transducereinheit nach einem der Ansprüche 6 bis 9, wobei die Sensoreinheit (108) einen Ultraschallpegelsensor (130), einen Ultraschall-Harnstoffkonzentrationssensor (128) und einen Temperatursensor (126) umfasst.

11. Transducereinheit nach einem der Ansprüche 6 bis 10, die weiterhin eine Stromverwaltungseinheit (144) zum Zuführen von Strom zu der Transducereinheit (102) umfasst.

12. Bewertungseinheit zum Bewerten eines elektrischen Transducer-Ausgabesignals (114), das wenigstens eine erste und eine zweite gemessene Variable angibt, wobei die Bewertungseinheit umfasst:

eine Ziel-Sendeempfängereinheit (116), die mit einer Kommunikationsleitung (106) verbunden werden kann und betriebsfähig ist zum Empfangen des codierten Transducer-Ausgabesignals (114), das über die Kommunikationsleitung (106) von einer Transducereinheit (102) gesendet wird, und zum Erzeugen eines decodierten Signals (118),
eine Zieleinrichtung (120), die mit der Ziel-Sendeempfängereinheit (116) verbunden ist und betriebsfähig ist zum Bewerten des decodierten Signals (118), das die erste und die zweite gemessene Variable angibt,
wobei das Transducer-Ausgabesignal (114) ein pulsbreitenmoduliertes PWM Signal ist und die Ziel-Sendeempfängereinheit (116) betriebsfähig ist zum Messen wenigstens einer Gesamtperiode (Tn) und wenigstens einer Pulsbreite (TnH) des PWM-Signals, zum Berechnen der ersten gemessenen Variable aus der Gesamtperiode und zum Berechnen der zweiten gemessenen Variable aus der Pulsbreite.

13. Bewertungseinheit nach Anspruch 12, wobei das PWM-Signal wenigstens einen ersten und einen zweiten Zeitrahmen aufweist, die alternierend gesendet werden, wobei der erste Zeitrahmen eine erste Gesamtperiode (T1), die eine erste gemessene Variable angibt, und eine erste Pulsbreite (T1H), die eine zweite gemessene Variable angibt, aufweist und wobei der zweite Zeitrahmen eine zweite Gesamtperiode (T2), die eine dritte gemessene Variable angibt, und eine zweite Pulsbreite (T2H), die eine vierte gemessene Variable angibt, aufweist.

14. Bewertungseinheit nach Anspruch 12 oder 13, wobei die gemessenen Variablen eine Harnstoffkonzentration, einen Fluidpegel in einem Tank, eine Temperatur des Fluids und/oder eine Statusvariable, die einen Status der Sensoreinheit angibt, umfassen.

15. Sensorsystem, das wenigstens eine Transducereinheit (102) gemäß einem der Ansprüche 6 bis 11 und wenigstens eine Bewertungseinheit (104) gemäß einem der Ansprüche 12 bis 14 umfasst.

**Revendications**

1. Procédé de transmission d'un signal de sortie de transducteur (114) d'une unité de transducteur (102) à une unité d'évaluation (104), ledit procédé comprenant les étapes suivantes :

mesure d'au moins une première variable mesurée et une deuxième variable mesurée à l'aide d'une unité de capteur (108) et génération d'un signal de sortie de capteur (110) indicatif de la variable mesurée,

calcul d'une période totale (Tn) et d'une largeur d'impulsion (TnH) d'un signal à modulation de largeur d'impulsion, PWM, ladite période totale (Tn) étant indicative de ladite première variable mesurée et ladite largeur d'impulsion (TnH) étant indicative de ladite deuxième variable mesurée,

transmission du signal PWM comme dit signal de sortie de transducteur (114) à l'unité d'évaluation (104).

2. Procédé de décodage d'un signal de sortie de transducteur (114) reçu d'une unité de transducteur (102), ledit procédé comprenant les étapes suivantes :

à l'aide d'une unité d'évaluation (104), réception d'un signal à modulation de largeur d'impulsion, PWM, qui forme ledit signal de sortie de transducteur (114),

détermination d'au moins une période totale (Tn) et d'au moins une largeur d'impulsion (TnH) du signal PWM,

calcul de première et deuxième variables mesurées à partir de ladite période totale et de ladite largeur d'impulsion, ladite période totale étant indicative de ladite première variable mesurée et ladite largeur d'impulsion étant indicative de ladite deuxième variable mesurée.

3. Procédé selon la revendication 1 ou 2, dans lequel le signal PWM comprend au moins des première et deuxième trames temporelles qui sont transmises alternativement, dans lequel la première trame temporelle comprend une première période totale (T1) indicative de ladite première variable mesurée et une première largeur d'impulsion (T1H) indicative d'une deuxième variable mesurée, et dans lequel la deuxième trame temporelle comprend une deuxième période totale (T2) indicative d'une troisième variable mesurée et une deuxième largeur d'impulsion (T2H) indicative d'une quatrième variable mesurée.

4. Procédé selon la revendication 3, dans lequel ladite première période totale (T1) est limitée à une valeur maximale qui est inférieure à une valeur minimale de ladite deuxième période totale (T2).

5. Procédé selon l'une des revendications 1 à 4, dans lequel lesdites variables mesurées comprennent une concentration d'urée, un niveau de fluide dans un réservoir, une température dudit fluide, et/ou une variable d'état indicative de l'état de ladite unité de capteur.

6. Unité de transducteur destinée à fournir un signal électrique de sortie de transducteur (114) à partir au moins de première et deuxième variables mesurées, dans laquelle l'unité de transducteur (102) comprend :

une unité de capteur (108) qui est utilisable pour mesurer les première et deuxième variables mesurées et pour générer des premier et deuxième signaux de capteur indicatifs desdites première et deuxième variables mesurées ;

une unité émetteur-récepteur de capteur (112) qui est utilisable pour générer ledit signal de sortie de transducteur (114) destiné à être transmis via une ligne de communication (106) à une unité d'évaluation (104),

dans laquelle ladite unité émetteur-récepteur de capteur (112) comprend une unité d'interface (122) qui est utilisable pour calculer au moins une période totale (Tn) et au moins une largeur d'impulsion (TnH) d'un signal à modulation de largeur d'impulsion, PWM, ladite période totale étant indicative de ladite première variable mesurée et ladite largeur d'impulsion étant indicative de ladite deuxième variable mesurée.

7. Unité de transducteur selon la revendication 6, dans laquelle l'unité de capteur (108) est utilisable pour générer une pluralité de signaux de capteur (110), et dans laquelle ladite unité d'interface (122) est utilisable pour générer le signal PWM comprenant au moins des première et deuxième trames temporelles qui sont transmises alternativement, dans laquelle la première trame temporelle comprend une première période totale (T1) indicative de ladite première variable mesurée et une première largeur d'impulsion (T1H) indicative d'une deuxième variable mesurée, et dans laquelle la deuxième trame temporelle comprend une deuxième période totale (T2) indicative d'une troisième variable mesurée et une deuxième largeur d'impulsion (T2H) indicative d'une quatrième variable mesurée.

8. Unité de transducteur selon la revendication 6 ou 7, comprenant en outre un oscillateur à quartz pour synchroniser le signal PWM.

9. Unité de transducteur selon l'une des revendications 6 à 8, comprenant en outre un temporisateur 32 bits pour générer ledit signal PWM.

10. Unité de transducteur selon l'une des revendications 6 à 9, dans laquelle ladite unité de capteur (108) comprend un capteur de niveau ultrasonique (130), un capteur de concentration d'urée ultrasonique (128) et un capteur de température (126).

**11.** Unité de transducteur selon l'une des revendications 6 à 10, comprenant en outre une unité de gestion d'alimentation (144) pour fournir une alimentation électrique à ladite unité de transducteur (102).

**12.** Unité d'évaluation destinée à évaluer un signal électrique de sortie de transducteur (114) indicatif d'au moins des première et deuxième variables mesurées, dans laquelle l'unité d'évaluation comprend :

une unité émetteur-récepteur de destination (116) qui peut être connectée à une ligne de communication (106) et est utilisable pour recevoir le signal de sortie de transducteur encodé (114) transmis via la ligne de communication (106) depuis une unité de transducteur (102) et pour générer un signal décodé (118), un dispositif de destination (120) connecté à l'unité émetteur-récepteur de destination (116) et utilisable pour évaluer ledit signal décodé (118) indicatif desdites première et deuxième variables mesurées, dans laquelle ledit signal de sortie de transducteur (114) est un signal à modulation de largeur d'impulsion, PWM, et
dans laquelle ladite unité émetteur-récepteur de destination (116) est utilisable pour mesurer au moins une période totale (Tn) et au moins une largeur d'impulsion (TnH) du signal PWM, pour calculer ladite première variable mesurée à partir de ladite période totale, et pour calculer ladite deuxième variable mesurée à partir de ladite largeur d'impulsion.

**13.** Unité d'évaluation selon la revendication 12, dans laquelle le signal PWM comprend au moins des première et deuxième trames temporelles qui sont transmises alternativement, dans laquelle la première trame temporelle comprend une première période totale (T1) indicative d'une première variable mesurée et une première largeur d'impulsion (T1H) indicative d'une deuxième variable mesurée, et dans laquelle la deuxième trame temporelle comprend une deuxième période totale (T2) indicative d'une troisième variable mesurée et une deuxième largeur d'impulsion (T2H) indicative d'une quatrième variable mesurée.

**14.** Unité d'évaluation selon la revendication 12 ou 13, dans laquelle lesdites variables mesurées comprennent une concentration d'urée, un niveau de fluide dans un réservoir, une température dudit fluide, et/ou une variable d'état indicative de l'état de ladite unité de capteur.

**15.** Système de capteur comprenant au moins une unité de transducteur (102) selon l'une des revendications 6 à 11, et au moins une unité d'évaluation (104) selon l'une des revendications 12 à 14.

**Fig. 1**

Fig. 2

**Fig. 3**

**Fig. 4**

**Fig. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011301883 A1
- EP 2348326 A2
- US 2012118059 A1